# EUROPEAN PATENT APPLICATION

(11) **EP 4 397 459 A1**
(43) Date of publication of application: **10.07.2024**
(21) Application number: 24150544.5
(22) Date of filing: 05.01.2024
(51) Int. Cl.: B26D 1/00, B26D 1/45, B23D 17/00, B26D 7/00

(54) **PROCESSING APPARATUS FOR ELECTRODE ASSEMBLY OF SECONDARY BATTERY**

(30) Priority: 05.01.2023 KR 20230001797
(71) Applicant: Samsung SDI Co., Ltd., Yongin-si, Gyeonggi-do 17084 (KR)
(72) Inventor: KIM, Jung Hyun, 17084 Yongin-si (KR); SHIN, Joo Youn, 17084 Yongin-si (KR); PARK, Jung Hyun, 17084 Yongin-si (KR); KIM, Joung Ku, 17084 Yongin-si (KR); LEE, Dong Sub, 17084 Yongin-si (KR); CHO, Seog Jin, 31418 Asan-si (KR)
(74) Representative: Marks & Clerk LLP

(57) **Abstract**

Provided is an apparatus for processing an electrode assembly of a secondary battery, which is capable of easily compacting a base material tab of a battery. An apparatus for processing a base material tab protruding from a cylindrical electrode assembly to one surface includes a vertical plate provided in a second direction perpendicular to a first direction that is a longitudinal direction of the electrode assembly, a rotatable plate provided as a planar plate parallel to the vertical plate and coupled to be rotatable relative to the vertical plate, and a plurality of blades coupled between the vertical plate and the rotatable plate. Each of the blades has a variable diameter in a central area defined by ends according to the relative rotation of the rotatable plate to process the base material tab of the electrode assembly.

## Description

### BACKGROUND

### 1. Field

Embodiments relate to an apparatus for processing an electrode assembly of a secondary battery, which is capable of easily compacting a base material tab.

### 2. Description of the Related Art

Secondary batteries are batteries that are chargeable and dischargeable, unlike primary batteries that are not chargeable, and also, a low-capacity battery in which one battery cell is packaged in the form of a pack is being used in portable small electronic devices such as cellular phones and camcorders, and a high capacity battery including tens of battery packs connected to one another is being used as a power source for driving a motor, e.g., of hybrid vehicles.

Such secondary batteries are manufactured in various shapes such as a cylindrical type, a prismatic type, and a pouch type. An electrode assembly, which is provided by interposing a separator between positive and negative electrode plates, and an electrolyte are embedded and installed in a case, and a cap plate is installed in the case. The electrode assembly is connected with a positive terminal and a negative terminal, which protrude through the cap plate and are exposed to the exterior of the electrode assembly.

Battery cells configured as such a secondary battery are connected to each other in series, parallel, or series-parallel, and thus, battery packs, each of which has an increasing output, are being used in various fields.

### SUMMARY

Aspects of some embodiments of the present disclosure provide an apparatus for processing an electrode assembly of a secondary battery, which is capable of easily compacting a base material tab.

According to some embodiments, an apparatus for processing a base material tab protruding from a cylindrical electrode assembly to one surface includes: a vertical plate provided in a second direction perpendicular to a first direction that is a longitudinal direction of the electrode assembly; a rotatable plate provided as a planar plate parallel to the vertical plate and coupled to be rotatable relative to the vertical plate; and a plurality of blades coupled between the vertical plate and the rotatable plate, wherein each of the blades has a variable diameter in a central area defined by ends according to the relative rotation of the rotatable plate to process (e.g., for processing) the base material tab of the electrode assembly.

All the ends of the plurality of blades may be disposed at the same angle.

The angle of each of the ends of the blades may correspond to 360° divided by the number of blades.

Each of the blades may be provided with a first protrusion and a second protrusion on both surfaces thereof facing each other so as to be respectively coupled to the vertical plate and the rotatable plate.

Each of the rotatable plate and the vertical plate may be provided with a plurality of linearly cut guide holes.

The first protrusion and the second protrusion of the blade may be coupled to the guide holes of the rotatable plate and the vertical plate so that movement thereof is dependent on the cutting direction of the guide holes, respectively.

The guide holes of the rotatable plate may be defined at positions corresponding to the guide holes of the vertical plate.

The guide holes of the rotatable plate may be arranged to be angled at a preset angle with respect to the guide holes of the vertical plate.

The plurality of blades may vary from a state, in which the central area has a diameter equal to or greater than that of the base material tab when the central area is opened, to a state in which the central area is closed.

The apparatus may further include: a gear part that moves linearly on one surface of the vertical plate; and an engagement part coupled to one side of the rotatable plate and engaged with the gear part to rotate the rotatable plate according to linear movement of the gear part.

The apparatus may further include a support unit configured to move the electrode assembly in the first direction in a state of fixing the electrode assembly.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:
FIG. 1 illustrates a perspective view of an apparatus for processing an electrode assembly according to embodiments;
FIGS. 2A and 2B illustrate views of an electrode assembly applied to the apparatus for processing the electrode assembly according to embodiments;
FIG. 3 illustrates a front view of a blade coupled to a linear movable unit and a rotatable plate in the apparatus for processing the electrode assembly according to embodiments;
FIG. 4 illustrates a rear view of a state in which the blade is coupled to a vertical plate in the apparatus for processing the electrode assembly according to embodiments;
FIGS. 5 and 6 illustrate the blade in the apparatus for processing the electrode assembly according to embodiments; and
FIGS. 7A to 7C illustrate a process in which a rotatable plate and a compaction plate operate according to an operation of the linear moving part in the apparatus for processing the electrode assembly according to embodiments.

### DETAILED DESCRIPTION

Hereinafter, embodiments will be described in detail with reference to the accompanying drawings.

Embodiments of the present disclosure may, however, be embodied in many different forms and should not be construed as being limited to the embodiments set forth herein; rather, these embodiments are provided so that those skilled in the art thoroughly understand the present disclosure. Rather, these embodiments are provided so that this disclosure will be thorough and complete, and will fully convey the scope of the present disclosure to those skilled in the art.

In addition, in the following drawings, the thickness or size of each layer is exaggerated for convenience and clarity of description, and the same reference numerals in the drawings refer to the same elements. As used in this specification, the term "and/or" includes any one and all combinations of one or more of the associated listed items.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise" and/or "comprising" used in this specification neither define the mentioned shapes, numbers, processes, operations, members, elements, and/or groups of these, nor exclude the presence or addition of one or more other different shapes, numbers, processes, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Hereinafter, a configuration of an apparatus for processing an electrode assembly of a secondary battery according to embodiments of the present disclosure will be described.

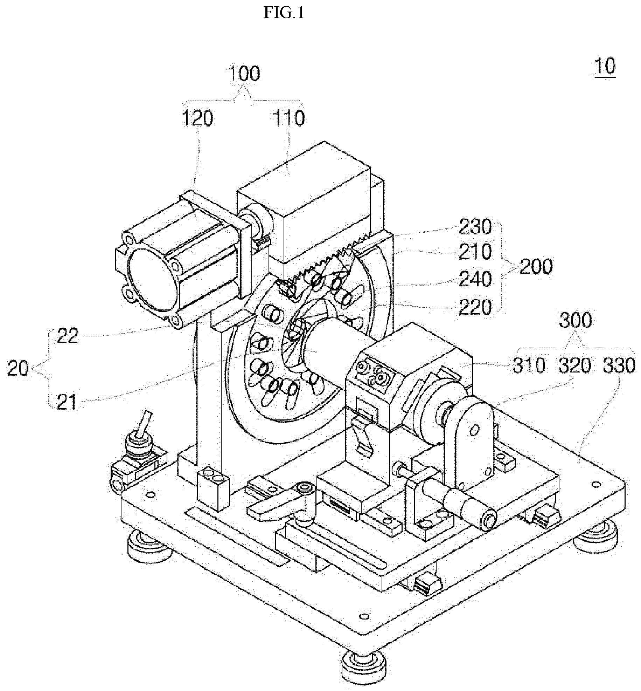

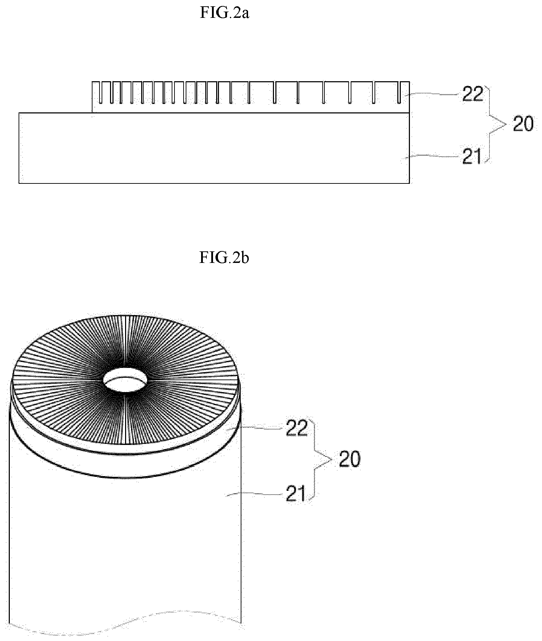

FIG. 1 illustrates a perspective view of an apparatus for processing an electrode assembly according to embodiments. FIGS. 2A and 2B illustrate views of an electrode assembly applied to the apparatus for processing the electrode assembly according to embodiments.

First, referring to FIG. 1, an apparatus 10 for processing an electrode assembly according to an embodiment of the present disclosure may include a linear movable unit 100, a processing unit 200, and a support unit 300.

The linear movable unit 100 may be disposed on an upper end of the processing apparatus 10 and may include a gear part 110 that moves linearly in one direction and a driving part 120 that linearly drives the gear part.

Here, the gear part 110 and the driving part 120 may be connected through a worm gear or the like, and the driving part 120 may be provided as a normal motor. In some embodiments, a rotational operation of the driving part 120 may be converted to the linear driving in one direction through the worm gear, and thus, the gear part 110 may be linearly driven. In some embodiments, because the driving part 120 operates in both forward and reverse directions, a horizontal position of the gear part 110 may be adjusted according to a control of an operator.

The processing unit 200 may be coupled to the gear part 110. In some embodiments, the processing unit 200 may include a vertical plate 210, a rotatable plate 220 disposed parallel to the vertical plate 210 to rotate in a forward/reverse direction, an engagement part 230 coupled to one end of the rotatable plate 220 and engaged with the gear part 110, and a blade 240 disposed between the rotatable plate 220 and the vertical plate 210 to process an electrode assembly 20.

The vertical plate 210 may be disposed below the linear movable unit 100 to fix a vertical position of the linear movable unit 100. In some embodiments, the rotatable plate 220 may be coupled to the vertical plate 210 in parallel and may rotate relative to the vertical plate 210 according to the driving of the engagement part 230. In some embodiments, the blade 240 may be provided in plurality, and a position of each of the blades 240 may be changed according to the rotation of the rotatable plate 220 to adjust a size of a central area on which ends of the blades 240 are gathered, thereby processing the electrode assembly 20.

The support unit 300 may be disposed on a lower end of the processing unit 200 to support the entire structure of the processing unit 200 and the linear movable unit 100. A workbench support unit 300 may include a vertical fixing part 310 that fixes a position of the electrode assembly 20 in a vertical direction, a horizontal moving part 320 that moves the electrode assembly 20 in a horizontal direction, and a table 330 disposed on the floor.

The vertical fixing part 310 may surround the electrode assembly 20, for example, one circumference of the electrode assembly 20 in a state in which the cylindrical electrode assembly 20 is laid down horizontally. In some embodiments, the position of the electrode assembly 20 in the vertical direction, that is, a working height may be fixed. In some embodiments, the position of the electrode assembly 20 in the vertical direction may be fixed so that a center of the electrode assembly 20 coincides with the central area defined by the ends of the blades 240.

In some embodiments, the horizontal moving part 320 may move the electrode assembly 20 fixed by the vertical fixing part 310 in the horizontal direction. The horizontal moving part 320 may push a rear side of the electrode assembly 20 so that the electrode assembly 20 reaches the position of the blade 240 described above. In some embodiments, the horizontal moving part 320 may operate to rotate the position of the electrode assembly 20 again after the processing by the blade 240 is completed.

The table 330 may be disposed on the floor to serve as a workbench that supports both the processing unit 200 and the linear movable unit 100 in addition to the vertical fixing part 310 or the horizontal movable part 320 of the above-described support unit 300.

As illustrated in FIG. 2A, the electrode assembly 20 may have a configuration in which base tabs 22, on which an coating portion is not applied, on one surface with respect to an electrode plate 21 that is coated with an active material. In some embodiments, if winding is performed in a state in which a separator is disposed between the electrode plates 21, the cylindrical electrode assembly 20 may be provided as illustrated in FIG. 2B. The base tabs 22 may protrude upward from the electrode assembly 20.

In some embodiments, the apparatus 10 for processing the electrode assembly according to an embodiment of the present disclosure may perform a compaction process on the base material tabs 22. In some embodiments, a protruding height of each of the base material tabs 22 may be reduced, and members such as a current collector may be easily welded to an upper portion of the base material tab 22 in the future.

Hereinafter, the operations of the linear movable unit 100 and the processing unit 200 in the apparatus 10 for processing the electrode assembly according to an embodiment of the present disclosure will be described in more detail.

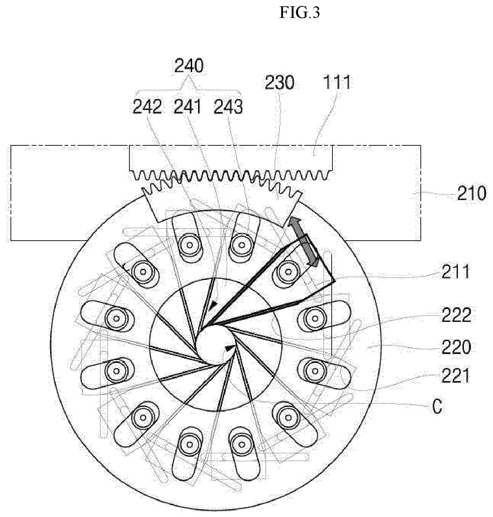

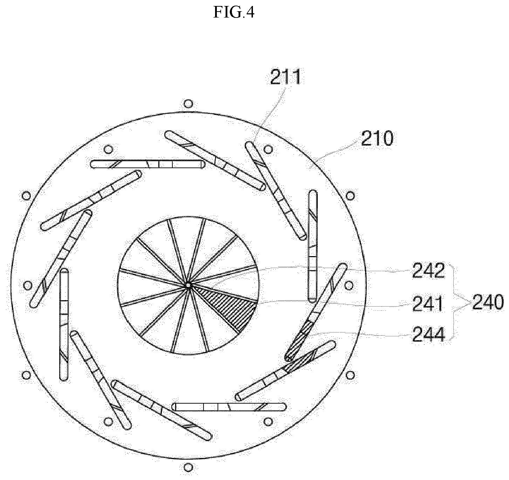

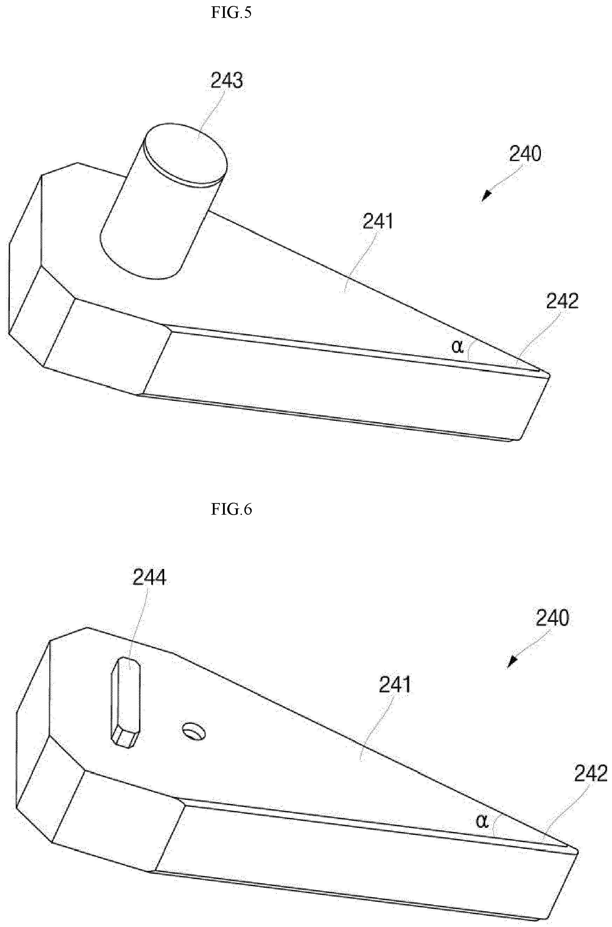

FIG. 3 illustrates a front view of the blade coupled to the linear movable unit and the rotatable plate in the apparatus for processing the electrode assembly according to embodiments. FIG. 4 illustrates a rear view of a state in which the blade is coupled to the vertical plate in the apparatus for processing the electrode assembly according to embodiments. FIGS. 5 and 6 illustrate the blade in the apparatus for processing the electrode assembly according to embodiments.

First, referring to FIG. 3, the apparatus 10 for processing the electrode assembly according to an embodiment of the present disclosure may be configured so that the engagement part 230 of the processing plate 200 is coupled to the gear 111 provided on the gear part 110 of the linear movable unit 100. In some embodiments, if the gear 111 also moves linearly in the horizontal direction as the linear movable unit 100 moves in the horizontal direction, the engagement part 230 may rotate accordingly, and the rotatable plate 220 coupled to the engagement part 230 may also rotate an the same angle.

If the rotatable plate 220 rotates, the positions of the plurality of blades 240 disposed between the rotatable plate 220 and the vertical plate 210 may be changed to correspond thereto, and a diameter of a central area C defined by the end 243 of the blade 240 may vary.

In the case of the rotatable plate 220, a plurality of guide holes 221 may be defined. In some embodiments, a protrusion disposed on the blade 240 may be coupled to the guide hole 221. In some embodiments, the rotatable plate 220 may have a processing hole 222 in a center into which the electrode assembly 20 is inserted. The processing hole 222 may be set to be equal to or larger than the diameter of the electrode assembly 20, and the processing, for example, a compacting operation may be performed in a state in which the base material tab 22 of the electrode assembly 20 is disposed in the processing hole 222.

In some embodiments, referring to FIG. 4, the apparatus 10 for processing the electrode assembly according to an embodiment of the present disclosure may have a plurality of guide holes 211 in the vertical plate 210. Comparing FIGS. 3 and 4 together, the guide holes 211 of the vertical plate 210 may be provided in the same number at positions corresponding to the guide holes 221 of the rotatable plate 200. However, a cutting direction of each of the guide holes 221 of the vertical plate 210 may not be parallel to a cutting direction of the corresponding guide holes of the rotatable plate 220 and may be misaligned to be maintained at a constant angle. The blade 240 coupled between the vertical plate 210 and the rotatable plate 220 may have a shape in which protrusions of both surfaces thereof are coupled to the guide holes 211 and 221, and as the rotatable plate 220 rotates, the positions of the blades 240 may be changed depending on the cutting direction of the holes 211 and 221.

As illustrated in FIGS. 5 and 6, the blade 240 may be configured to have a certain acute angle α with respect to an approximately wedge-shaped body 241, and a first protrusion 243 and a second protrusion 244 are disposed on both surfaces of the body 241, respectively.

First, the angle α of the end 242 may relate to the number of blades 240, and may be, for example, an angle that is equal to the total 360° divided by the number of blades 240. For example, as illustrated in FIG. 3, if the number of blades 240 is 12, the angle α formed at the end 242 of each blade 240 may be about 30°. That is, if all the ends 242 of the blades 240 moves the end to be gathered into the central area C, each of the ends 242 may have a completely closed shape.

The first protrusion 243 may have an approximately cylindrical shape defined on one side of the body 241 of the blade 240 and may be coupled to the guide hole 221 of the rotatable plate 220 disposed relatively at the front surface. In some embodiments, as illustrated in FIG. 3, the first protrusion 243 may have a restriction in movement dependent on the cutting direction of the guide hole 221 of the rotatable plate 220.

In some embodiments, the second protrusion 244 may be disposed on an opposite surface that is opposite to one surface of the body 241 of the blade 240. The second protrusion 244 may be coupled to the guide hole 211 of the vertical plate 210. In some embodiments, as illustrated in FIG. 4, the second protrusion 244 may also have a restriction in movement dependent on the cutting direction of the guide hole 211 of the vertical plate 210.

Because the first protrusion 243 and the second protrusion 244 are disposed on both surfaces of one body 241, the position of the blade 240 may be continuously changed as the rotatable plate 220 rotates, and a diameter of the central area C defined by the ends 242 of the plurality of blades 240 may also continuously changed. For example, in FIG. 3, the central area C is illustrated as having a certain diameter, but in FIG. 4, the central area C may be illustrated in a closed shape.

Hereinafter, the processing operation according to the position of the blade of the apparatus 10 for processing the electrode assembly according to an embodiment of the present disclosure will be sequentially described.

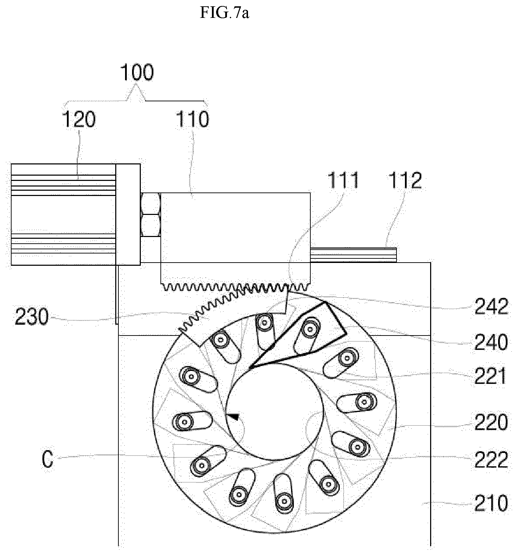

FIGS. 7A to 7C illustrate a process in which the rotatable plate and the compaction plate operate according to the operation of the linear moving part in the apparatus for processing the electrode assembly according to embodiments.

First, referring to FIG. 7A, the gear part 110 of the linear movable unit 100 may be coupled to the driving part 120, and the gear part 110 may be provided as a rail 112 that provides a linear path of the gear 111 and the gear 111.

In some embodiments, the rotatable plate 220 may be engaged with the gear 111 through the engagement part 230 of the processing unit 200, and the blade 240 may be provided between the vertical plate 210 and the rotatable plate 220 as described above.

In some embodiments, the central area C defined by the end 242 of the blade 240 may have approximately the same size as the processing hole 222 of the rotatable plate 220. In some embodiments, the base material tab 22 of the electrode assembly 20 may enter the central area C of the blade 240 through the processing hole 222 of the rotatable plate 220.

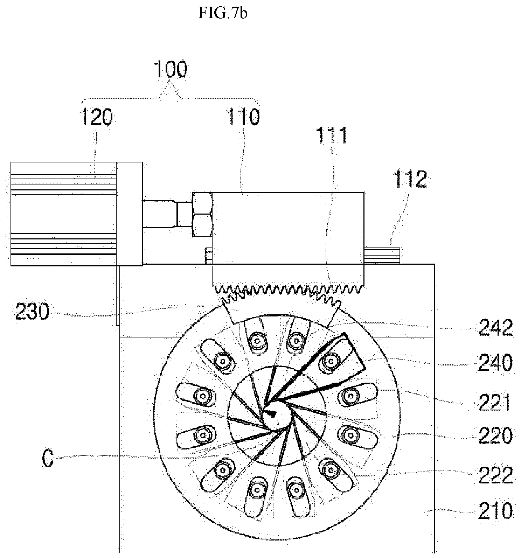

Next, referring to FIG. 7B, the gear 111 of the gear part 110 may move linearly to a right side based on the drawing, and the rotatable plate 220 may rotate in a clockwise direction through the engagement part 230 engaged therewith. In some embodiments, the blade 240, of which a position is restricted in the cutting direction of the guide holes 211 and 221 of the vertical plate 210 and the rotatable plate 220, may be changed in position due to the relative rotation of the rotatable plate 220. In some embodiments, the first protrusion 243 may move along the guide hole 221 of the rotational plate 220, and the second protrusion 244 may move along the guide hole 211 of the vertical plate 210 so that each of the blades 240 moves in a counterclockwise direction. In some embodiments, the ends 242 of the blades 240 may be gathered while moving in a spiral shape in a counterclockwise direction, and thus, as illustrated in FIG. 7B, the central area C defined by the ends 242 of the blades 240 may be modified to have a diameter less than that in FIG. 7A. In some embodiments, the base material tabs 22 of the electrode assembly 20 disposed within the central area C may be gathered by an operation of reducing the central area C, and thus, the compaction process may be performed. In some embodiments, the compaction process may be performed once at an appropriate level according to the diameter of the electrode assembly 20.

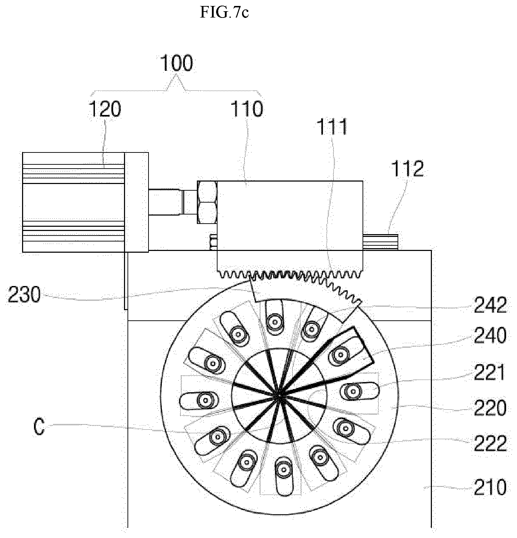

Next, referring to FIG. 7C, the gear 111 of the gear part 110 may move more linearly to the right side based on the drawing, and the rotatable plate 220 may further rotate in the clockwise direction. In some embodiments, the ends 242 of the blades 240 may be further gathered through the same operation, and thus, the shape in which the central area C is approximately closed may be provided by the end 242. In some embodiments, even if the diameter of the electrode assembly 20 disposed on the central area C is very small due to this operation, the compaction process may be possible, and the apparatus 10 for processing the electrode assembly according to an embodiment of the present disclosure may have the advantage of being applicable to the electrode assemblies having various diameters.

In the apparatus for processing the electrode assembly of the secondary battery according to the present disclosure, the positions of the blades disposed between the vertical plate and the rotatable plate may be changed according to easily compact the base material tab of the electrode assembly by the end of the blade.

The above-mentioned embodiment is merely an embodiment of the apparatus for processing the electrode assembly according to the present invention, and thus, the present invention is not limited to the foregoing embodiment, and also it will be understood by those of ordinary skill in the art that various changes in form and details may be made therein without departing from the scope of the present invention as defined by the following claims.

## Claims

1. An apparatus for processing a base material tab protruding from a cylindrical electrode assembly to one surface, the apparatus comprising:
a vertical plate provided in a second direction perpendicular to a first direction that is a longitudinal direction of the electrode assembly;
a rotatable plate provided as a planar plate parallel to the vertical plate and coupled to be rotatable relative to the vertical plate; and
a plurality of blades coupled between the vertical plate and the rotatable plate,
wherein each of the blades has a variable diameter in a central area defined by ends according to the relative rotation of the rotatable plate to process the base material tab of the electrode assembly.

2. The apparatus as claimed in claim 1, wherein all the ends of the plurality of blades are disposed at the same angle.

3. The apparatus as claimed in claim 2, wherein the angle of each of the ends of the blades corresponds to 360° divided by the number of blades.

4. The apparatus as claimed in any one of claims 1 to 3, wherein each of the blades is provided with a first protrusion and a second protrusion on both surfaces thereof facing each other so as to be respectively coupled to the vertical plate and the rotatable plate.

5. The apparatus as claimed in claim 4, wherein each of the rotatable plate and the vertical plate is provided with a plurality of linearly cut guide holes.

6. The apparatus as claimed in claim 5, wherein the first protrusion and the second protrusion of the blade are coupled to the guide holes of the rotatable plate and the vertical plate so that movement thereof is dependent on the cutting direction of the guide holes, respectively.

7. The apparatus as claimed in claim 5 or claim 6, wherein the guide holes of the rotatable plate are defined at positions corresponding to the guide holes of the vertical plate.

8. The apparatus as claimed in claim 7, wherein the guide holes of the rotatable plate are arranged to be angled at a preset angle with respect to the guide holes of the vertical plate.

9. The apparatus as claimed in any one of claims 1 to 8, wherein the plurality of blades vary from a state, in which the central area has a diameter equal to or greater than that of the base material tab when the central area is opened, to a state in which the central area is closed.

10. The apparatus as claimed in any one of claims 1 to 9, further comprising:
a gear part that moves linearly on one surface of the vertical plate; and
an engagement part coupled to one side of the rotatable plate and engaged with the gear part to rotate the rotatable plate according to linear movement of the gear part.

11. The apparatus as claimed in any one of claims 1 to 10, further comprising a support unit configured to move the electrode assembly in the first direction in a state of fixing the electrode assembly.
